(19) Europäisches Patentamt

European Patent Office

Office européen des brevets

(11) **EP 1 643 433 A1**

(12) **EUROPEAN PATENT APPLICATION**

(43) Date of publication:
**05.04.2006 Bulletin 2006/14**

(51) Int Cl.:
*G06Q 10/00* *(2006.01)*

(21) Application number: **05109091.8**

(22) Date of filing: **30.09.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **30.09.2004 US 955587**

(71) Applicant: **SAP AG**
**69190 Walldorf (DE)**

(72) Inventors:
 • **Schweitzer, Michael**
  **69181 Leimen (DE)**
 • **Foerster, Stefan**
  **68766 Hockenheim (DE)**
 • **Huber, Edward W.**
  **Morton, IL 61550 (US)**
 • **Smith, Wayne E.**
  **Morton, IL 61550 (US)**
 • **Monson, Michael J.**
  **Morton, IL 61550 (US)**
 • **Kamp, Jim E.**
  **Tremont, IL 61568 (US)**
 • **McCoy, Gregory A.**
  **Brimfield, IL 61517 (US)**
 • **Forret, Steve J.**
  **Morton, IL 61550 (US)**
 • **Harris, Peggy S.**
  **Norman, IL 61761 (US)**
 • **Baermann, Guenther J.**
  **50259 Puhlheim (DE)**
 • **Eich, Eric P.**
  **50354 Huerth (DE)**
 • **Schmitz, Hans**
  **53881 Euskirchen (DE)**
 • **Taylor, Brian R.**
  **Leamington Spa, CV32 6RU (GB)**
 • **Fishwick, Mark**
  **Brighton, MI 48114 (US)**
 • **Matthews, Ryan, G.**
  **Livonia, MI 48154 (US)**

(74) Representative: **Schneider, Günther Martin et al**
**Bettinger Schneider Schramm,**
**Patent- und Rechtsanwälte,**
**Postfach 86 02 67**
**81629 München (DE)**

(54) **Methods and systems for redeploying stock in a distribution network**

(57)  Systems and methods are disclosed for redeploying stock between inventory locations. The systems and methods may include receiving a redeployment indication indicating stock to be redeployed and determining, based on the redeployment indication, the first inventory location for receiving the stock and the second inventory location for redeploying the stock. Further, the systems and methods may include determining a cost-benefit value based on a savings value and a move cost value, wherein the savings value reflects an amount to be saved if the stock was redeployed from the second location to the first location and wherein the move cost value reflects a cost for redeploying the stock from the second location to the first location. Finally, a determination to deploy the stock may be made by comparing the cost-benefit value to, for example, a redeployment threshold value.

FIG. 2

EP 1 643 433 A1

**Description**

BACKGROUND OF THE INVENTION

I. Field of the Invention

The present invention generally relates to redeploying stock. More particularly, the present invention relates to redeploying stock among a plurality of locations, such as stock inventory locations in a distribution network.

II. Background Information

Deployment is a decision making process for distributing parts or other stock elements in a distribution network from a source location that has the stock to target locations that need the stock. The source location may replenish the stock supply of the target locations according to each target's past due, current, or future stock requirements. Quantities deployed to any inventory location may be based on, for example, the target's current situation, its on-hand inventory, its forecasted demand, or its fixed requirements. The quantity of stock required by an inventory location may be calculated when the source location deploys the stock.

In some situations, the inventory locations in a distribution network may need more stock than the source location has available to deploy or may need it more quickly than the source location can deliver it. Conventional distribution methods include simply placing an order for the stock with a source location and then waiting for delivery of the stock through conventional processes (e.g. along the conventional network paths). For example, if an inventory location has a need for a particular part, but has no such parts currently at the location, conventional methods may result in simply notifying a subject requesting the part that the part is on back order. Specifically, a "child" location may request a part from a "parent" location. If the part is not available at the parent location, for example, the request may be forwarded to the parent's parent and so on creating a time consuming process. This may be problematic because the requester may need the stock in a more timely manner and may even seek that stocked part from another supplier, resulting in a loss of business to the inventory location. Under the conventional distribution methods, this may occur even though the stock is located, for example, in another location of the distribution network.

In view of the foregoing, there is a need for methods and systems for redeploying stock within a distribution network. Furthermore, there is a need for systems and methods for efficiently redeploying stock among inventory locations when one location has an unsatisfied request for material and another location has excessive stock on hand.

SUMMARY OF THE INVENTION

Consistent with embodiments of the present invention, systems and methods are disclosed for efficiently redeploying stock between inventory locations.

In accordance with one embodiment, a method is provided for redeploying stock to a first inventory location from a second inventory location. The method may comprise: receiving a redeployment indication indicating stock to be redeployed; determining, based on the redeployment indication, the first inventory location for receiving the stock and the second inventory location for redeploying the stock; determining a cost-benefit value based on a savings value and a move cost value, wherein the savings value reflects an amount to be saved if the stock was redeployed from the second location to the first location and wherein the move cost value reflects a cost for redeploying the stock from the second location to the first location; and redeploying the stock from the second location to the first location when the cost-benefit value is not less than a redeployment threshold value.

According to another embodiment, a system is provided for redeploying stock to a first inventory location from a second inventory location. The system may comprise: a component for receiving a redeployment indication indicating stock to be redeployed: a component for determining, based on the redeployment indication, the first inventory location for receiving the stock and the second inventory location for redeploying the stock; a component for determining a cost-benefit value based on a savings value and a move cost value, wherein the savings value reflects an amount to be saved if the stock was redeployed from the second location to the first location and wherein the move cost value reflects a cost for redeploying the stock from the second location to the first location; and a component for determining to redeploy the stock from the second location to the first location by comparing the cost-benefit value to a redeployment threshold value.

In accordance with yet another embodiment, a computer-readable medium is provided that comprises a set of instructions which when executed perform a method for redeploying stock. The method may comprise: receiving a redeployment indication indicating stock to be redeployed: determining, based on the redeployment indication, the first inventory location for receiving the stock and the second inventory location for redeploying the stock: determining a cost-benefit value based on a savings value and a move cost value, wherein the savings value reflects an amount that would be saved if the stock was redeployed from the second location to the first location and wherein the move cost value reflects a cost for redeploying the stock from the second location to the first location: and determining to redeploy the stock from the second location to the first location when the cost-benefit value exceeds or is equal to a redeployment threshold value.

It is to be understood that both the foregoing general description and the following detailed description are exemplary and explanatory only, and should not be considered restrictive of the scope of the invention, as described and claimed. Further, features and/or variations may be provided in addition to those set forth herein. For example, embodiments of the invention may be directed to various combinations and sub-combinations of the features described in the detailed description.

BRIEF DESCRIPTION OF THE DRAWINGS

The accompanying drawings, which are incorporated in and constitute a part of this disclosure, illustrate various embodiments and aspects of the present invention. In the drawings:

FIG. 1 is a block diagram of an exemplary stock redeployment system, consistent with an embodiment of the present invention;

FIG. 2 is a flow chart of an exemplary method for redeploying stock, consistent with an embodiment of the present invention;

FIG. 3 is a flow chart of an exemplary method for receiving a redeployment indication and determining inventory locations, consistent with an embodiment of the present invention;

FIG. 4 is a graph for illustrating an exemplary situation in which no service benefit can be obtained from redeployment; and

FIG. 5 is a graph for illustrating another exemplary situation which, in contrast to the example of FIG. 4, a service benefit can be obtained from redeployment.

DETAILED DESCRIPTION

The following detailed description refers to the accompanying drawings. Wherever possible, the same reference numbers are used in the drawings and the following description to refer to the same or similar parts. While several exemplary embodiments and features of the invention are described herein, modifications, adaptations and other implementations are possible, without departing from the spirit and scope of the invention. For example, substitutions, additions or modifications may be made to the components illustrated in the drawings, and the exemplary methods described herein may be modified by substituting, reordering or adding steps to the disclosed methods. Accordingly, the following detailed description does not limit the invention. Instead, the proper scope of the invention is defined by the appended claims.

Systems and methods consistent with embodiments of the present invention manage the redeployment of stock. The redeployment of stock, consistent with the invention, may be performed in various environments, such as stock distribution networks. In one embodiment, stock is redeployed among a plurality of locations, such as stock inventory locations. The plurality of locations may comprise a defined set of locations based on, for example, geographic proximity. As used herein, the term "stock" refers to any element or quantity of stock that is redeployed. By way of example, stock may comprise any element or quantity of parts for manufacturing or providing a finished product, or any element or quantity of parts for providing services. Stock elements may also comprise commercial products or items, such as books, office supplies, articles of clothing, electronic devices, home appliances or other merchandise. Further, as used herein, the term "stock inventory location" refers to any location or facility that produces, stores, maintains, handles or distributes stock.

Systems and methods consistent with the invention may be implemented to optimally redeploy stock among inventory locations in a distribution network or other stock redeployment environments. In one embodiment, a redeployment server is provided that receives a redeployment indication or request indicating stock to be redeployed. The indication may be from a location that may need the stock. Next, the system, based on the redeployment indication, may determine a first inventory location for receiving the stock and a second inventory location for redeploying the stock. Once the system determines the locations, it then may determine a cost-benefit value based on a savings value and a move cost value. The savings value may reflect an amount that would be saved if the stock were redeployed from the second location to the first location. Further, the move cost value may reflect a cost for redeploying the stock from the second location to the first location. With the cost-benefit value determined, the system may then redeploy the stock from the second location to the first location when the cost-benefit value exceeds or is equal to a redeployment threshold value. The threshold value may reflect the marginal amount that the savings value should be above the move cost value.

Consistent with an embodiment of the present invention, a system for redeploying stock to a first inventory location from a second inventory location is provided. The system may comprise: a component for receiving a redeployment indication indicating stock to be redeployed; a component for determining, based on the redeployment indication, the first inventory location for receiving the stock and the second inventory location for redeploying the stock; a component for determining a cost-benefit value based on a savings value and a move cost value, wherein the savings value reflects an amount to be saved if the stock was redeployed from the second location to the first location and wherein the move cost value reflects a cost for redeploying the stock from the second location to the first location; and a component for determining to redeploy the stock from the second location to the first location when the cost-benefit value is not less than a redeployment threshold value.

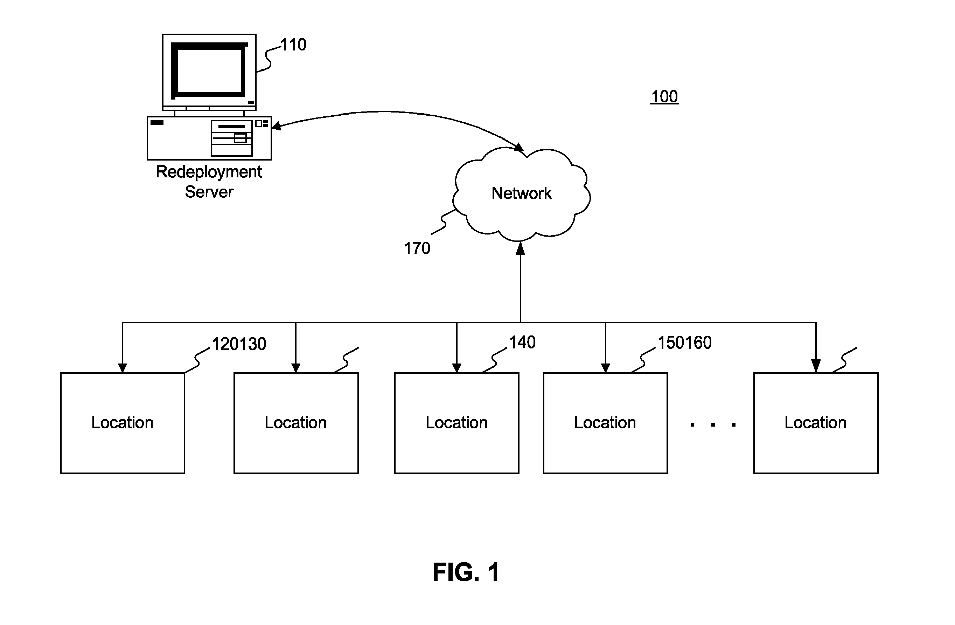

Consistent with an embodiment of the present invention, the aforementioned components may be implemented in a stock redeployment system, such as the exemplary stock redeployment system 100 of FIG. 1. Any suitable combination of hardware, software and/or firmware may be used to implement these components. By way of example, the components may be implemented with a redeployment server 110 in combination with redeployment system 100. The aforementioned system and server are exemplary and other systems and servers may comprise the aforementioned components, consistent with embodiments of the present invention.

FIG. 1 illustrates a block diagram of exemplary stock redeployment system 100, consistent with an embodiment of the present invention. As shown in FIG. 1, stock redeployment system 100 may have redeployment server 110 and a number of inventory locations 120 to 160, each interconnected via a network 170. As indicated above, inventory locations may comprise any location or facility that stores, maintains, handles or distributes stock. For example, inventory locations 120 to 160 may comprise a factory, a warehouse, a distribution center, retail stores, or any other facility that produces, distributes or stores stock elements. Further, system 100 may distribute or redeploy any type of stock, including, for example, automotive parts, engine parts, or heavy equipment parts. System 100 is exemplary, however, and networking arrangements other than that shown in FIG. 1 may comprise systems consistent with the present invention. For example, while FIG. 1 shows only five inventory locations, the invention may be used with any number of inventory locations.

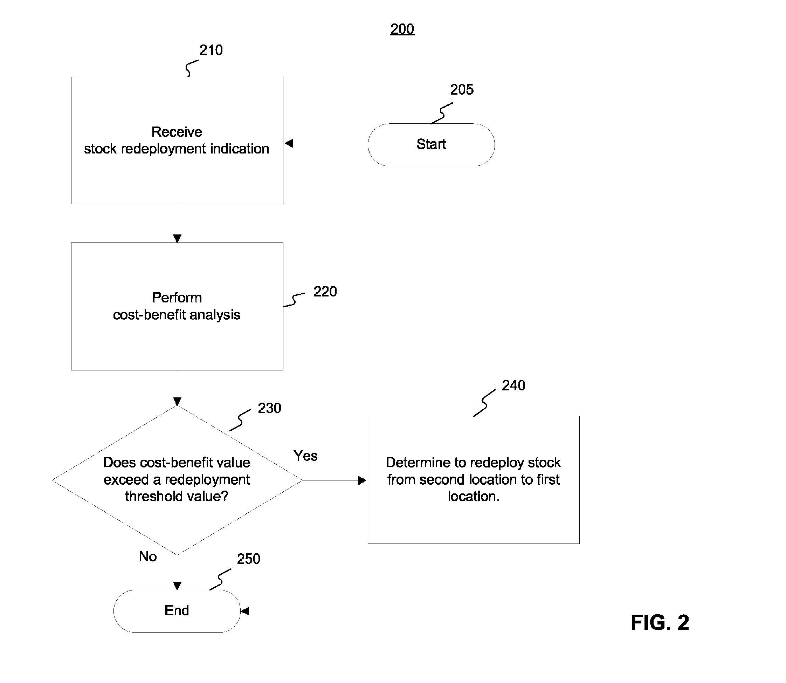

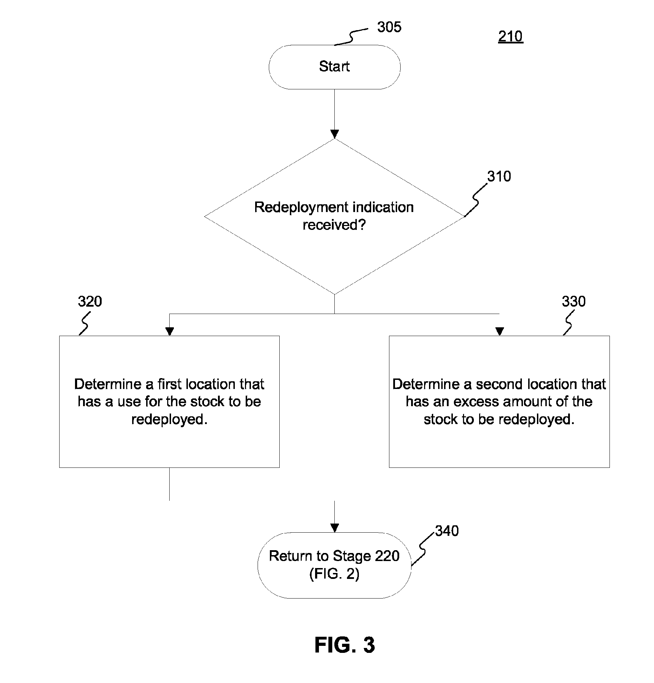

Redeployment server 110 may communicate with inventory locations 120 to 160 via network 170 and implement stock redeployment processes consistent with the present invention. These redeployment processes may be used to control the distribution or redeployment of stock between inventory locations 120 to 160. The stock redeployment methods and processes implemented by server 110 are described in more detail herein with respect to, for example, FIGS. 2 and 3.

Redeployment server 110 may be implemented using a personal computer, network computer, mainframe, or other similar microcomputer-based workstation. Redeployment server 110 may though comprise any type of computer operating environment, such as hand-held devices, multiprocessor systems, microprocessor-based or programmable sender electronic devices, minicomputers, mainframe computers, and the like. Redeployment server 110 may also be practiced in distributed computing environments where tasks are performed by remote processing devices. Furthermore, redeployment server 110 may comprise a mobile terminal, such as a smart phone, a cellular telephone, a cellular telephone utilizing wireless application protocol (WAP), personal digital assistant (PDA), intelligent pager, portable computer, a hand held computer, a conventional telephone, or a facsimile machine. The aforementioned systems and devices are exemplary and redeployment server 110 may comprise other systems or devices.

Redeployment server 110 may be located at one of inventory locations 120 to 160, or in any other facility, including distribution centers, bulk warehouses, retail stores, or a central office. Moreover, redeployment server 110 may be operated by, for example, a distribution network operator, a warehouse manager, a retail inventory manager, or any other person or entity. It can be appreciated that redeployment server 110 may be located at a variety of places and operated by a variety of people. For example, redeployment server 110 may also perform demand planning and deployment for the inventory locations 120 to 160 and for locations other than locations 120 to 160 (not shown). Accordingly, the requirements and the stock situation of all locations (locations 120 to 160 and for locations other than locations 120 to 160) may be known to redeployment server 110. Changes in stock at any location may be transmitted to redeployment server 110 when, for example, material is added to or taken from a location.

Network 170 may comprise, for example, a local area network (LAN) or a wide area network (WAN). Such networking environments are commonplace in offices, enterprise-wide computer networks, intranets, and the Internet, and are known by those skilled in the art. When a LAN is used as network 170, a network interface located at redeployment server 110 may be used to connect server 110 to inventory locations 120 to 160. When network 170 is implemented in a WAN networking environment, such as the Internet, server 110 and inventory locations 120 to 160 may typically include an internal or external modem (not shown) or other means for establishing communications over the WAN. Further, in utilizing network 170, data sent over network 170 may be encrypted to insure data security by using known encryption/decryption techniques.

In addition to utilizing a wire line communications system as network 170, a wireless communications system, or a combination of wire line and wireless may be utilized as network 170 in order to, for example, exchange web pages via the Internet, exchange e-mails via the Internet, or for utilizing other communications channels. Wireless can be defined as radio transmission via the airwaves. However, those skilled in the art will appreciate that various other communication techniques can be used to provide wireless transmission, including infrared line of sight, cellular, microwave, satellite, packet radio and spread spectrum radio. Redeployment server 110 in the wireless environment can be any mobile terminal, such as the mobile terminals described above. Wireless data may include, but is not limited to, paging, text messaging, e-mail, Internet access and other specialized data applications specifically excluding or including voice transmission.

Redeployment system 100 may also transmit inventory data or other types of data by methods and processes other than, or in combination with, network 170. These methods and processes may include, but are not limited to, transferring data via diskette, CD ROM, facsimile, conventional mail, an interactive voice response system (IVR), or via voice over a publicly switched telephone network.

FIG. 2 is a flow chart setting forth the general stages involved in an exemplary method 200 for redeploying stock. As described in more detail below, method 200 may, for example, be used when one of inventory locations 120 to 160 does not have enough stock to meet its stock requirements (e.g., a stock shortage situation) or has too much stock (e.g., a stock excess situation). Redeployment server 110, for example, may then implement method 200 to determine whether and how to redeploy the stock.

Referring to FIG. 2, method 200 begins at starting block 205 and proceeds to stage 210, where server 110 receives a stock redeployment indication. The redeployment indication may be a signal or message that indicates that a redeployment condition exists. The redeployment condition may be examined by server 110 to determine, for example, a first inventory location that has a use for particular stock element(s) and a second inventory location that has an excess amount of that stock. In one embodiment, a second location is identified that may be used to redeploy stock and satisfy the requirements of the first location. In another embodiment, server 110 may identify a plurality of locations that may be used, collectively, to redeploy stock and meet the needs of the first location. In such a case, the stock requirements of the first location may be split into groups and evaluated individually with respect to each of the identified plurality of locations. For example, if the first location is located in area A (e.g., a predefined geographical zone) and area B, system 100 may consider other locations within area A and/or area B for purposes of whether to redeploy stock to or from the first location. However, if the first location in area A only, then system 100 may consider only other locations within area A for redeployment. Furthermore, system 100 may forbid stock from being redeployed from a parent location to a child location (since this is part of the normal stock supply chain for deploying stock), but may allow redeployment from a child location to a parent. To provide a further illustration of embodiments consistent with the invention, an exemplary implementation of stage 210 is described in greater detail below with respect to FIG. 3.

From stage 210, exemplary method 200 continues to stage 220 where deployment server 110 may perform a cost-benefit analysis. By performing the cost-benefit analysis described below, server 110 may determine whether it should redeploy the stock from the second inventory location (that has an excess stock) to the first inventory location (that has a use for that stock). In redeployment systems consistent with the invention, the cost-benefit analysis may be based on an inventory savings value and an inventory move cost for the particular stock to be redeployed. For example, redeployment may be performed if the inventory savings value overweighs the inventory move cost.

Furthermore, an additional parameter, "m" for example, may be added to the inventory move cost in order to shift the threshold when redeployment may be performed. Accordingly, redeployment may be performed if the inventory savings value is greater than the inventory move cost plus the additional parameter "m". For example, parameter "m" may reflect the marginal amount that the savings value should be above the move cost value.

The inventory savings value may reflect an amount that the second inventory location would save if it redeployed the stock to the first location. The inventory move cost, on the other hand, may reflect an amount that the second inventory location would spend if it redeployed the stock to the first location. While the savings and move cost values may be described with respect to the second location, it will be understood that these savings and move cost values may be determined on the basis of the redeployment system 100 as a whole. In other words, the savings value may reflect the savings that the redeployment system 100 as a whole may gain, and the moving cost value may reflect the move costs that the redeployment system 100 as a whole may incur.

With respect to the savings value, redeployment server 110 may determine a savings value based on one or more of an inventory savings component, a warehouse savings component, and a service benefits component. For example, the savings value may be expressed in equation (1) as shown below:

Equation (1)

Savings Value = Inventory Savings + Warehouse Savings + Service Benefits

The inventory savings component may reflect the average inventory storage cost for the stock to be redeployed. To this end, the inventory savings component may be based on the transferred quantity of the stock, the standard unit cost of the stock, and a factor describing the average carrying cost for the inventory location as a percentage of the standard unit cost of the stock. In one exemplary embodiment, the inventory savings may be expressed in equation (2) as shown below:

Equation (2)

$$\text{Inventory Savings} = c \times (\text{Transferred Qty} / \text{Forecasted Amount Received Per Year}) \times (\text{Transferred Qty}) \times (\text{Standard Cost Per Unit})$$

where:

"c" is the correction factor describing an average carrying cost for the inventory location over one year as a percentage of the standard unit cost of the stock;
"Transferred Qty" is the quantity of stock to be redeployed;
"Forecasted Amount Received Per Year" is the forecasted number of stock elements that the inventory location will receive in one year; and
"Standard Cost Per Unit" is the unit cost of the stock.

As an exemplary illustration of equation (2), assume the excess stock is a carburetor. The inventory location may forecast that it will receive 32 such carburetors over the next year. If the standard cost of the carburetor is $400 and the average carrying cost of the carburetor for one year is 10% of the carburetor's unit cost, then the resulting inventory savings for one unit would be = (.10) X (1/32) X (1)($400) = $1.25.

With respect to the warehouse savings component, it may reflect the savings gained from freeing up inventory space at the second inventory location. In other words, the warehouse savings component reflects that savings gained from having more space available to store other inventory items. Because, however, the inventory location may not effectively realize any gain if the inventory location is operating at a low inventory capacity (e.g., its inventory shelves are already mostly empty), redeployment server 110 may first determine whether any such savings may be realized. To this end, server 110 may first determine whether the utilization of the warehouse at the second inventory location (e.g., the percentage of available storage space that is occupied) exceeds a predetermined utilization threshold value. For example, the threshold value may correspond to 80% utilization. Thus, if the utilization amount does exceed the utilization threshold (e.g., 85 % of the warehouse is being utilized), then the warehouse savings component may be included within the total inventory savings value. Moreover, if the utilization exceeds an even higher threshold value (e.g., 95 %), then the warehouse savings value may be scaled upwards (e.g., by a multiple of 1.5) to reflect the greater amount of savings gained when warehouse space is at a premium.

Thus, as described above, the savings due to freeing space may be inversely proportional to the amount of free space at the second inventory location. Table 1 further illustrates these concepts. For example, Table 1 shows that if the second inventory location is being utilized at a capacity less than the utilization threshold value (e.g., less than X=80%), then there may be no savings resulting the space freed by redeploying the excess stock. However, if the second location is being utilized at a capacity of 85%, then there may be a savings of $A resulting from the space freed by redeploying the excess stock. If the second location is being utilized at an even higher rate, such as greater than 95% capacity (with Y = 95%), there may be a savings of $A multiplied by a factor B, for example, resulting from the space freed by redeploying the excess stock.

Table 1

| Utilization Capacity | Warehouse Savings |
|---|---|
| Capacity < X% | $0 |
| X% ≤ Capacity < Y% | $A |
| Y% ≤ Capacity < 100% | ($A) X B |

The service benefits component reflects the value obtained from preventing a potential service loss due to an unfilled stock requirement being met by the first inventory location. In other words, if redeploying the stock can prevent a potential service loss due to an unfulfilled order, the value of fulfilling the order may comprise the service benefit component. Redeployment server 110 may determine the service benefits component based on the potentially prevented loss due to redeployment.

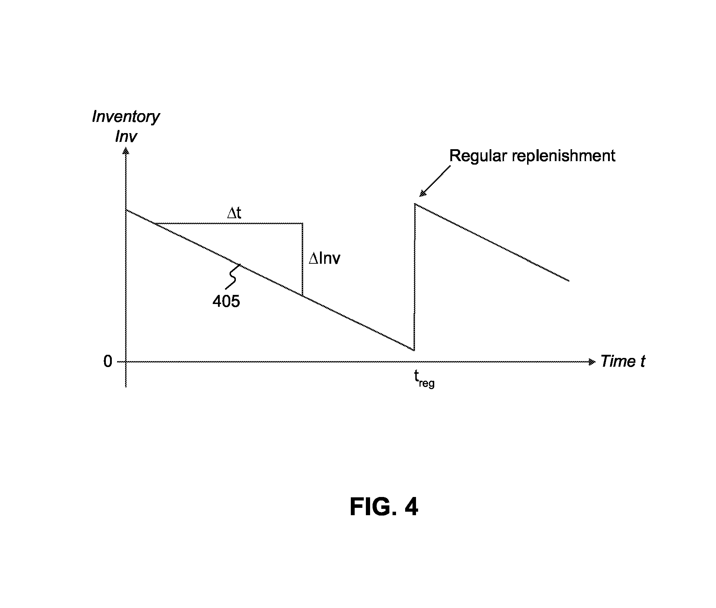

By way of example, FIG. 4 illustrates an exemplary situation in which no service benefit may be obtained from redeployment. As shown if FIG. 4, curve 405 illustrates the stock level of a location. Because curve 405 does not go below the horizontal axis, a negative inventory level is not realized. Accordingly, a potential service loss due to an unfulfilled order may not be realized, because the location illustrated by the example of FIG. 4 does not run out of stock before its regular replenishment time ($t_{reg.}$)

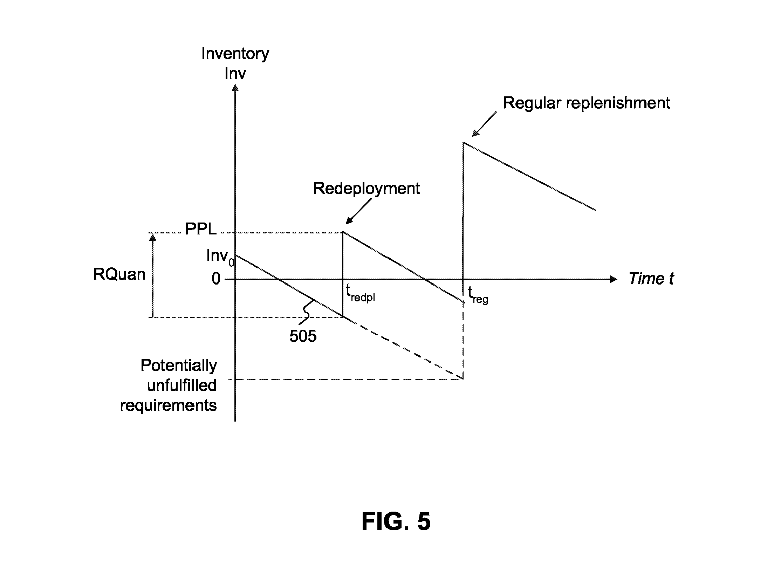

In contrast to FIG. 4, FIG. 5 shows an exemplary situation where regular replenishment may not prevent inventory from becoming negative. Curve 505 illustrates the stock level of a location. In this case, redeployment may prevent a loss (PPL>0) and, thus, a service benefit may be achieved. As shown in FIG. 5:

$$\text{Equation (3)}$$

$$\text{Service Benefit} = (\text{PPL}) \times (\text{Cost of a Lost Sale})$$

$$\text{PPL} = ((\Delta \text{Inv}/\Delta t) \times (t_{redepl})) + \text{Inv}_0 + \text{RQuan}$$

where:

    PPL is the Potentially Prevented Loss;
    RQuan is the Redeployment Quantity;
    $\text{Inv}_0$ is the inventory at time to;
    $\Delta \text{Inv}$ is the change in inventory quantity since time $t_0$; and
    $\Delta t$ is the change in time since time to.

The PPL may be calculated from the data of the location requesting the stock. However, "Cost of a Lost Sale" may be a global parameter used for all locations.

Further, as for covering requirements of an inventory location, redeployment server 110 may limit redeployment to those situations where the first inventory location cannot be supplied by regular distribution processes. For example, the first inventory location may be able to receive the stock via normal distribution channels in adequate time to fulfill its stock requirements. In such cases, server 110 may determine that redeployment from another inventory location is not required.

The other value of the cost-benefit analysis, the move cost, may reflect a cost for transporting the stock. The move cost may include a facility move cost reflecting the cost of the second inventory location in preparing the stock for shipment. For example, the facility move cost may reflect the labor and materials spent preparing and packaging the stock for shipment. Furthermore, the facility move cost may reflect any facility move cost at the receiving end. In one embodiment, the facility move cost may be based on a transportation cost per unit weight of the stock multiplied by the weight of the redeployed stock. The move cost value may also include the cost transporting the stock from the second inventory location to the first inventory location. Thus, the move cost value may be determined as equal to: (Transportation Cost Per Unit Weight X Deployed Part Weight) + Facility Move Cost.

At stage 230, redeployment server 110 determines if the cost-benefit value is equal to or exceeds a redeployment threshold value. For example, a redeployment threshold value may be set that reflects the marginal amount that the savings value should be above the move cost value. The threshold value may use parameter "m" as described above. Thus, if the cost-benefit value is less than the redeployment threshold value, redeployment server 110 may determine that system 100 should not redeploy the stock and the process may terminate (stage 250).

If the cost-benefit value exceeds the redeployment threshold value, then, in stage 240, redeployment server 110 may determine that the required stock element(s) should be redeployed from the second inventory location to the first inventory location. For example, after the determination is made by the server 110 to redeploy the stock, the stock may be transported (e.g., via ground, air, or rail transport) to the first inventory location. Moreover, redeployment quantities may be rounded to multiples of pack stages and may be rounded according to the deployment rounding rules valid for the first location. For example, while location 120 may need 17 pieces, location 130 may redeploy 20 pieces to location 120.

Furthermore, the location with the highest excess stock may be used to redeploy stock to a location with the highest need for the stock. If a cost-benefit analysis does not allow redeployment to the location with the highest need from the location with the highest excess stock, the location with the next highest excess stock may be used to supply the needed stock. The locations may be re-sorted with respect to highest excess stock levels after each redeployment decision.

As illustrated in FIG. 2, exemplary method 200 may end at stage 250 when, for example, server 110 determines at stage 230 that the cost-benefit value is not greater than the redeployment threshold value, or when the stock is redeployed to the first inventory location at stage 240.

FIG. 3 illustrates an exemplary method for receiving and analyzing a redeployment indication. The exemplary method of FIG. 3 may be implemented as part of stage 210 in FIG. 2, where redeployment server 110 receives a redeployment indication and determines that a first location has a need for stock and that a second location has excess stock.

As shown in FIG. 3, at stage 310, server 110 may trigger a stock redeployment process based on a received redeployment indication. The redeployment indication may be a signal, message, request or any other type of indication. In one embodiment, the redeployment indication comprises a message or signal received by server 110 via network 170 from one of the inventory locations 120-160. In another embodiment, the redeployment indication is entered or loaded into server 110 by a system operator. By way of further examples, the redeployment indication may comprise a short-supply signal (e.g., when the first location requests new stock to fulfill unsatisfied stock requirements), a de-stock signal (e.g., when the second location requests to transfer at least a portion of its stock to another inventory location), or a facility space reduction signal (e.g., when the second location needs to free-up its warehouse space by transferring at least a portion of its stock to another inventory location). A de-stock decision may mean that a part will no longer be stored at a certain location (for example, because it is or belongs to a discontinued product or the network has been redesigned so that the product will be stocked somewhere else in the future). A facility space reduction signal may indicate that the available space for that certain part may be reduced (for example, because the space is needed for other, more valuable parts), however, the part may still be stocked at that location. Furthermore, the redeployment indication may comprise a supersession signal (e.g. when a stock part is replaced by a newer version and the part needs to be redeployed within system 100 to equalize its stock levels due to its replacement) or a periodical schedule signal (e.g. when redeployment is done periodically).

At stage 320, redeployment server 110 may determine a first inventory location that may receive stock for redeployment. Determination of the first inventory location may depend upon, or be identified within, the redeployment indication signal received in stage 310. For example, the indication signal may include a short-supply signal sent by one of inventory locations 120 to 160. In such a case, the inventory location sending the short-supply signal may be determined to be the location that would receive the redeployed stock.

In other cases, the indication signal may not itself identify the inventory location that should receive the redeployed stock, and server 110 may then determine, in stage 320, which inventory location needs the redeployed stock. For instance, server 110 may determine the location that would receive the stock when the indication signal includes a signal (e.g., a de-stock signal, a facility space reduction signal) from an inventory location requesting transfer of its own stock. To this end, server 110 may determine the inventory location that should receive the redeployed stock based on, for example, inventory levels and the geographic locations of inventory locations 120 to 160. For example, server 110 may determine that the first location is the inventory location that has the greatest inventory need for the stock element that is requested to be redeployed. Server 110 may also determine the first location based on its geographic proximity to the second location requesting that at least a portion of its stock be redeployed. Inventory locations nearer to the second location may then be given a higher priority for receiving the redeployed stock. Using these considerations, server 110 may thus evaluate, e.g., by using network 170, those inventory locations 120 to 160 located within a geographic region (e.g., a distribution region, a region defined by a ZIP code or set of ZIP codes, etc.).

In one embodiment, the amount of stock to be redeployed is also determined based on the indication message or signal. For example, the quantity of stock elements for redeployment may be specified in the indication message or signal (e.g., a short-supply signal) or may be determined or calculated from the indication message or signal (e.g., a facility space reduction signal). In the latter case, server 110 may evaluate or collect inventory data to determine the stock quantity for redeployment.

At stage 330, redeployment server 110 may determine the second inventory location that may redeploy the excess stock element(s). As was the case above in stage 320, determining the second inventory location may depend upon, or be identified within, the redeployment indication signal received in stage 310. For instance, the indication signal itself may identify the inventory location that may redeploy the stock. As described above, this may occur when the indication signal includes a signal (e.g., a de-stock signal or a facility space reduction signal) from an inventory location requesting transfer of its own stock. In these cases, the inventory location requesting a stock transfer may be determined as the second inventory location.

In other cases, the indication signal may not itself identify the second inventory location, and server 110 may then determine, in stage 330, which inventory location should redeploy the stock. For example, the indication signal may include a short-supply signal identifying, as discussed above, one of inventory locations 120 to 160 as the location that would receive the redeployed stock. Server 110 may then determine the inventory location that should redeploy the stock based on, for example, the inventory levels and geographic locations of the other inventory locations 120 to 160. For example, server 110 may determine that the second location is the inventory location that has an excess quantity of the stock and that is geographically near the first inventory location. In another embodiment, server 110 may identify a plurality of locations to deploy stock from and cumulatively satisfy the requirements of the first location. In such a case, the stock requirements of the first location may be split into a number of groups or sets, which are individually evaluated with respect to the locations (e.g., by repeating the stages of FIGS. 2 and 3). For example, if a first location requires 50 carburetors, the requirement for 50 carburetors may be split into five groups of 10 or other combinations (e.g. two groups of 25, etc.) and a corresponding number of locations may be identified and individually analyzed to satisfy the stock requirements of the split groups.

If the redeployment indication comprises a supersession signal, then redeployment may be based upon consideration of a facility exhaust date and a network exhaust date. The facility exhaust date may be a forecasted date for when a particular location's supply of the stock item being replaced will be exhausted. The network exhaust date may be the date when the network no longer receives the replaced stock item, such as when the supplier of that stock may no longer supplies it. The network exhaust date may be shifted forward in time to account for when the network's supply will then be subsequently exhausted. If a facility exhaust date for a given location is later than a shifted network exhaust date, then the location will have excess stock available from the time between the shifted network exhaust date and the facility exhaust date. The excess amount of stock may be the total gross requirements of the given location for this time period. If, on the other hand, the facility exhaust date is before the shifted network exhaust date, then the location will have a shortage of stock for the time between the facility exhaust date and the shifted network exhaust date. The stock shortage may be then be used by system 100 to determine whether a redeployment is appropriate.

Once redeployment server 110 then determines which of inventory locations 120 to 160 correspond to the first and second inventory locations, processing returns to stage 220 of FIG. 2, as indicated at stage 340 of FIG. 3. Further, while the above describes stage 320 before stage 330, systems consistent with the invention may implement stage 330 before implementing stage 320, or both stages 320 and 330 may be implemented in parallel. In other words, server 110 may determine, in any order, the first and second inventory locations referred to in FIGS. 2 and 3, or even at the same time.

While certain features and embodiments of the invention have been described, other embodiments of the invention will be apparent to those skilled in the art from consideration of the specification and practice of the embodiments of the invention disclosed herein. Furthermore, although embodiments of the present invention have been described as being associated with data stored in memory and other storage mediums, one skilled in the art will appreciate that these aspects can also be stored on or read from other types of computer-readable media, such as secondary storage devices, like hard disks, floppy disks, or a CD-ROM, a carrier wave from the Internet, or other forms of RAM or ROM. Further, the steps of the disclosed methods may be modified in any manner, including by reordering steps and/or inserting or deleting steps, without departing from the principles of the invention.

It is intended, therefore, that the specification and examples be considered as exemplary only, with a true scope and spirit of the invention being indicated by the following claims and their full scope of equivalents.

**Claims**

1. A method for redeploying stock to a first inventory location from a second inventory location, the method comprising:

   receiving a redeployment indication indicating stock to be redeployed;
   determining, based on the redeployment indication, the first inventory location for receiving the stock and the second inventory location for redeploying the stock;
   determining a cost-benefit value based on a savings value and a move cost value, wherein the savings value reflects an amount to be saved if the stock was redeployed from the second location to the first location and wherein the move cost value reflects a cost for redeploying the stock from the second location to the first location; and
   redeploying the stock from the second location to the first location when the cost-benefit value is not less than a redeployment threshold value.

2. The method of claim 1, wherein the received indication identifies the second location having an excess amount of the stock.

3. The method of claim 2, wherein the indication comprises at least one of a de-stock signal and a facility space reduction signal.

4. The method of claim 2, wherein determining the first location is based on one of a geographical proximity of the first location to the second location and on a manual grouping of locations to a regional entity.

5. The method of claim 2, wherein determining the first location is based on an inventory level of the first location.

6. The method of claim 1, wherein the received indication signal identifies the first location having a use for the stock.

7. The method of claim 6, wherein the indication signal comprises a short supply signal received from the first location.

8. The method of claim 6, wherein determining the second location is based on a geographical proximity of the second location to the first location.

9. The method of claim 6, wherein determining the second location is based on an inventory level of the second location.

10. The method of claim 1, wherein the savings value reflects at least one of an inventory savings component, a warehouse savings component, and a service benefits component.

11. The method of claim 10, wherein the inventory savings component reflects an inventory storage cost to be saved by redeploying the stock.

12. The method of claim 11, wherein the inventory savings component is based on a quantity of the stock to be redeployed and an average carrying cost for the stock.

13. The method of claim 10, wherein the warehouse savings component reflects a savings resulting from spaced freed at the second location.

14. The method of claim 13, wherein the warehouse savings component is greater than zero if the utilized storage capacity of the second location exceeds a first utilization threshold value.

15. The method of claim 13, wherein the warehouse savings component is increased if the utilized storage capacity of the second location exceeds a second utilization threshold value, which is above the first utilization threshold value.

16. The method of claim 10, wherein the service benefits component reflects the value obtained from preventing a potential service loss due to an unfulfilled requirement being met by the first location.

17. The method of claim 1, wherein the move cost value includes at least one of a facility move cost associated with preparing the stock for shipment and a shipment cost for shipping the stock.

18. The method of claim 1, wherein redeploying the stock is performed only when the first location's use for the stock cannot be fulfilled in time through standard distribution channels.

19. The method of claim 18, further comprising determining that the first location's use for the stock cannot be fulfilled based upon a facility exhaust date and a network exhaust date.

20. The method of claim 1, wherein the stock comprises at least one of automotive parts, engine parts, or heavy equipment parts.

21. The method of claim 1, wherein at least one of the first location and the second location comprise at least one of a factory, a warehouse, a retail store, a distribution center, and a bulk warehouse.

22. A system for redeploying stock to a first inventory location to a second inventory location, the system comprising:

a component for receiving a redeployment indication indicating stock to be redeployed;
a component for determining, based on the redeployment indication, the first inventory location for receiving the stock and the second inventory location for redeploying the stock;
a component for determining a cost-benefit vlaue based on a savings value and a move cost value, wherein the savings value reflects an amount to be saved if the stock was redeployed from the second location to the first location and wherein the move cost value reflects a cost for redeploying the stock from the second location to the first location; and

EP 1 643 433 A1

a component for determining to redeploy the stock from the second location to the first location by comparing the cost-benefit value to a redeployment threshold value.

23. The system of claim 22, wherein the component for determining to redeploy the stock determines that the stock should be redeployed to the first location when the cost benefit value is not less than the redeployment threshold value.

24. The system of claim 22, wherein the component for determining to redeploy the stock determines that the stock should not be redeployed to the first location when the cost benefit value is less than move costs.

25. The system of claim 24, wherein a parameter is added to the move costs.

26. The system of claim 22, wherein the component for determining the first location is configured for using a geographical proximity of the first location to the second location.

27. The system of claim 22, wherein the component for determining the first location is configured for using an inventory level of the first location.

28. The system of claim 22, wherein the received indication signal identifies the first location having a use for the stock.

29. The system of claim 28, wherein the indication comprises a short supply signal received from the first location.

30. The system of claim 28, wherein the component for determining the second location is configured for using a geographical proximity of the second location to the first location.

31. The system of claim 28, wherein the component for determining the second location is configured for using an inventory level of the second location.

32. The system of claim 22, wherein the savings value reflects at least one of an inventory savings component, a warehouse savings component, and a service benefits component.

33. The system of claim 32, wherein the inventory savings component reflects an inventory storage cost that would be saved by redeploying the stock.

34. The system of claim 33, wherein the inventory savings component is based on a quantity of the stock to be redeployed and an average carrying cost for the stock.

35. The system of claim 32, wherein the warehouse savings component reflects a savings resulting from spaced freed at the second location.

36. The system of claim 35, wherein the warehouse savings component is greater than zero if the utilized storage capacity of the second location exceeds a first utilization threshold value.

37. The system of claim 35, wherein the warehouse savings component is increased if the utilized storage capacity of the second location exceeds a second utilization threshold value, which is above the first utilization threshold value.

38. The system of claim 32, wherein the service benefits component reflects the value obtained from preventing a potential service loss due to an unfulfilled requirement being met by the first location.

39. The system of claim 22, wherein the move cost value includes at least one of a facility move cost associated with preparing the stock for shipment and a shipment cost for shipping the stock.

40. The system of claim 22, wherein the component for redeploying the stock is configured to be used only when the first location's use for the stock cannot be fulfilled through standard distribution channels.

41. The system of claim 40, wherein the component for redeploying the stock is further configured to determine that the first location's use for the stock cannot be fulfilled based upon a facility exhaust date and a network exhaust date.

42. The system of claim 22, wherein the stock comprises at least one of automotive parts, engine parts, or heavy equipment parts.

**43.** The system of claim 22, wherein at least one of the first location and the second location comprise at least one of a factory, a warehouse, a retail store, a distribution center, and a bulk warehouse.

**44.** A computer-readable medium comprising a set of instructions which when executed perform a method for redeploying stock, the method comprising:

receiving a redeployment indication indicating stock to be redeployed;
determining, based on the redeployment indication, the first inventory location for receiving the stock and the second inventory location for redeploying the stock;
determining a cost-benefit value based on a savings value and a move cost value, wherein the savings value reflects an amount to be saved if the stock was redeployed from the second location to the first location and wherein the move cost value reflects a cost for redeploying the stock from the second location to the first location; and
determining to redeploy the stock from the second location to the first location when the cost-benefit value exceeds or is equal to a redeployment threshold value.

**45.** The computer-readable medium of claim 44, wherein the received indication identifies the second location having an excess amount of the stock.

**46.** The computer-readable medium of claim 45, wherein the indication comprises at least one of a de-stock signal and a facility space reduction signal.

**47.** The computer-readable medium of claim 45, wherein determining the first location is based on one of a geographical proximity of the first location to the second location and on a manual grouping of locations to a regional entity.

**48.** The computer-readable medium of claim 45, wherein determining the first location is based on an inventory level of the first location.

**49.** The computer-readable medium of claim 44, wherein the received indication signal identifies the first location having a use for the stock.

**50.** The computer-readable medium of claim 49, wherein the indication signal comprises a short supply signal received from the first location.

**51.** The computer-readable medium of claim 49, wherein determining the second location is based on a geographical proximity of the second location to the first location.

**52.** The computer-readable medium of claim 49, wherein determining the second location is based on an inventory level of the second location.

**53.** The computer-readable medium of claim 44, wherein the savings value reflects at least one of an inventory savings component, a warehouse savings component, and a service benefits component.

**54.** The computer-readable medium of claim 53, wherein the inventory savings component reflects an inventory storage cost to be saved by redeploying the stock.

**55.** The computer-readable medium of claim 54, wherein the inventory savings component is based on a quantity of the stock to be redeployed and an average carrying cost for the stock.

**56.** The computer-readable medium of claim 53, wherein the warehouse savings component reflects a savings resulting from spaced freed at the second location.

**57.** The computer-readable medium of claim 56, wherein the warehouse savings component is greater than zero if the utilized storage capacity of the second location exceeds a first utilization threshold value.

**58.** The computer-readable medium of claim 56, wherein the warehouse savings component is increased if the utilized storage capacity of the second location exceeds a second utilization threshold value, which is above the first utilization threshold value.

59. The computer-readable medium of claim 53, wherein the service benefits component reflects the value obtained from preventing a potential service loss due to an unfulfilled requirement being met by the first location.

60. The computer-readable medium of claim 44, wherein the move cost value includes at least one of a facility move cost associated with preparing the stock for shipment and a shipment cost for shipping the stock.

61. The computer-readable medium of claim 44, wherein determining a redeployment of the stock is performed only when the first location's use for the stock element cannot be fulfilled through standard distribution channels.

62. The computer-readable medium of claim 61, further comprising determining that the first location's use for the stock cannot be fulfilled based upon a facility exhaust date and a network exhaust date.

63. The computer-readable medium of claim 54, wherein the stock comprises at least one of automotive parts, engine parts, or heavy equipment parts.

64. The computer-readable medium of claim 44, wherein at least one of the first location and the second location comprise at least one of a factory, a warehouse, a retail store, a distribution center, and a bulk warehouse.

65. A method for redeploying stock to a first inventory location from a second inventory location, the method comprising:

receiving a redeployment request indicating stock to be redeployed, wherein the redeployment request identifies at least one of the first location for receiving the stock and the second location for redeploying the stock; determining a cost-benefit value based on a savings value reflecting a savings if the stock was redeployed from the second location to the first location and a move cost value reflecting a cost for redeploying the stock from the second location to the first location; and redeploying the stock from the second location to the first location when the cost-benefit value exceeds a redeployment threshold value.

66. A method for redeploying stock, the method comprising:

identifying a first location for receiving the stock; determining a savings value reflecting a savings if the stock was redeployed from a second location to the first location and a move cost value reflecting a cost for redeploying the stock from the second location to the first location; performing a cost benefit analysis based on the savings value and move cost value to determine if the stock redeployment from the second location to the first location is beneficial; and redeploying the stock from the second location to the first location when the stock redeployment is determined to be beneficial.

67. A method according to claim 66, wherein performing a cost benefit analysis comprises determining a cost benefit value from the savings value and move cost value and comparing them.

68. A method according to claim 67, wherein performing a cost benefit analysis further comprises determining that the redeployment is beneficial when the cost benefit value is not less than the redeployment threshold value.

69. A method according to claim 66, wherein performing a cost benefit analysis comprises determining that the redeployment is not beneficial when it is possible to deploy the stock to the first location using standard distribution channels.

70. A method according to claim 66, further comprising identifying a plurality of locations with stock to redeploy to the first location, the plurality of locations including the second location.

**FIG. 1**

FIG. 2

305

**Start**

210

310

Redeployment indication received?

320

Determine a first location that has a use for the stock to be redeployed.

330

Determine a second location that has an excess amount of the stock to be redeployed.

340

Return to Stage 220 (FIG. 2)

**FIG. 3**

FIG. 4

**FIG. 5**

EP 1 643 433 A1

**European Patent Office**

**EUROPEAN SEARCH REPORT**

Application Number

EP 05 10 9091

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/181528 A1 (TIRINATO JODY ANN ET AL) 16 September 2004 (2004-09-16)<br>* abstract *<br>* paragraphs [0001] - [0022] *<br>* paragraphs [0033], [0034] *<br>* paragraphs [0067] - [0072] *<br>----- | 1-70 | G06F17/60 |
| X | SIPRELLE A J ET AL INSTITUTE OF ELECTRICAL AND ELECTRONICS ENGINEERS: "Benefits of using a supply cilun smulation tool to study inventory allocation"<br>PROCEEDINGS OF THE 2003 WINTER SIMULATION CONFERENCE. WSC'03. NEW ORLEANS, LA, DEC. 7 - 10, 2003, WINTER SIMULATION CONFERENCE, NEW YORK, NY : IEEE, US, vol. VOL. 2 OF 2. CONF. 36, 7 December 2003 (2003-12-07), pages 238-245, XP010679786<br>ISBN: 0-7803-8131-9<br>* the whole document *<br>----- | 1-70 | |
| X | WO 01/84278 A (ASSETTRADE) 8 November 2001 (2001-11-08)<br>* abstract *<br>* page 4, line 24 - page 5, line 3 *<br>* page 6, line 10 - page 9, line 31 *<br>* page 13, line 11 - page 17, line 11 *<br>-----<br>-/-- | 1-70 | **TECHNICAL FIELDS SEARCHED (IPC)**<br><br>G06F |

The present search report has been drawn up for all claims

| Place of search | Date of completion of the search | Examiner |
|---|---|---|
| The Hague | 23 November 2005 | Peelen, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 05 10 9091

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HU J ET AL: "Approximate solutions for multi-location inventory systems with transshipments" INTERNATIONAL JOURNAL OF PRODUCTION ECONOMICS, ELSEVIER, AMSTERDAM, NL, vol. 97, no. 1, 19 August 2004 (2004-08-19), pages 31-43, XP004907862 ISSN: 0925-5273 * abstract * * paragraphs [0001] - [02.1] * ----- | 1-70 | |
| A | US 2003/018490 A1 (MAGERS ALLYN E ET AL) 23 January 2003 (2003-01-23) * abstract * * paragraphs [0003] - [0019] * * paragraphs [0042], [0114], [0115] * * paragraphs [0197] - [0205] * ----- | 1-70 | |

TECHNICAL FIELDS SEARCHED (IPC)

The present search report has been drawn up for all claims

| Place of search | Date of completion of the search | Examiner |
|---|---|---|
| The Hague | 23 November 2005 | Peelen, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 05 10 9091

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2005

| Patent document cited in search report | Publication date | Patent family member(s) | Publication date |
|---|---|---|---|
| US 2004181528 A1 | 16-09-2004 | WO 2004081746 A2 | 23-09-2004 |
| WO 0184278 A | 08-11-2001 | AU 6112701 A | 12-11-2001 |
| US 2003018490 A1 | 23-01-2003 | NONE | |